# EUROPEAN PATENT APPLICATION

(11) **EP 4 556 192 A1**
(43) Date of publication of application: **21.05.2025**
(21) Application number: 23859894.0
(22) Date of filing: 24.07.2023
(51) Int. Cl.: B29C 43/12, B29C 43/34, B29C 70/16, B29C 70/44

(54) **METHOD AND DEVICE FOR MOLDING COMPOSITE MATERIAL**

(30) Priority: 29.08.2022 JP 2022136038
(71) Applicant: Mitsubishi Heavy Industries, Ltd., Tokyo 100-8332 (JP); Akita University, Akita-shi Akita 010-8502 (JP)
(72) Inventor: MURAOKA, Mikio, Akita-shi, Akita 010-8502 (JP); TAKAGI, Kiyoka, Tokyo 100-8332 (JP); MATSUYAMA, Daiki, Tokyo 100-8332 (JP)
(74) Representative: Hoffmann Eitle
(86) International application number: PCT/JP2023/026979
(87) International publication number: WO 2024/048125

(57) **Abstract**

In a composite material molding method for molding a composite material by shaping and curing, by using a molding die, a laminate in which a plurality of fiber sheets are laminated, the composite material includes a product portion serving as a portion to be molded as a product and an excess portion extending from the product portion, and the molding die has a first molding surface for molding the product portion, a second molding surface for molding the excess portion, and a recess for drawing in a part of the laminate disposed on the second molding surface. The composite material molding method includes the steps of: disposing the laminate on the molding die with the part of the laminate facing the recess; covering the laminate with a covering member to hermetically seal a space between the covering member and the molding die; sucking atmosphere in the space between the covering member and the molding die to draw in the part of the laminate into the recess and to shape the laminate; and molding the composite material including the product portion and the excess portion by curing the laminate after shaping.

## Description

### Field

The present disclosure relates to a composite material molding method and a molding apparatus.

### Background

As conventionally known, there are a composite material molding method and a molding apparatus that mold a composite material by forming a prepreg material on a non-planar portion of a lay-up mandrel, covering the prepreg material with a bag film, vacuuming inside the bag film, and heating and curing the prepreg material (refer to Patent Literature 1, for example).

### Citation List

### Patent Literature

Patent Literature 1: Japanese Patent Application Laid-open No. 2012-187925 Summary

### Technical Problem

By the way, some composite materials have a shape-changing portion called a joggle portion. The joggle portion is provided to a girder member with a recessed sectional shape extending in the longitudinal direction and is a portion at which the sectional shape in the section orthogonal to the longitudinal direction changes along the longitudinal direction, for example. To mold a composite material, a laminate in which fiber sheets are laminated before molding is shaped using a covering member, such as a vacuum bag. In a composite material with a shape-changing portion, however, wrinkles may possibly be formed around the shape-changing portion, resulting in molding defects.

Therefore, an object of the present disclosure is to provide a composite material molding method and a molding apparatus that can suppress the occurrence of molding defects due to shaping a laminate.

### Solution to Problem

A composite material molding method according to the present disclosure is for molding a composite material by shaping, by using a molding die, a laminate in which a plurality of fiber sheets are laminated, and curing resin impregnated in the fiber sheets, wherein the composite material includes a product portion serving as a portion to be molded as a product and an excess portion extending from the product portion, the molding die has a first molding surface for molding the product portion, a second molding surface for molding the excess portion, and a recess for drawing in a part of the laminate disposed on the second molding surface. The composite material molding method includes the steps of: disposing the laminate on the molding die over the first molding surface and the second molding surface such that the part of the laminate faces the recess; covering the laminate with a covering member to hermetically seal a space between the covering member and the molding die; sucking atmosphere in the space between the covering member and the molding die to draw in the part of the laminate into the recess and to shape the laminate; and molding the composite material including the product portion and the excess portion by curing the laminate after shaping.

A molding apparatus according to the present disclosure is configured to mold a composite material by shaping a laminate in which a plurality of fiber sheets are laminated, and curing resin impregnated in the fiber sheets, wherein the composite material includes a product portion serving as a portion to be molded as a product and an excess portion extending from the product portion. The molding apparatus includes: a molding die having a first molding surface for molding the product portion, a second molding surface for molding the excess portion, and a recess for drawing in a part of the laminate disposed on the second molding surface; a covering member that covers the laminate; and a suction device configured to suck atmosphere in a space between the covering member and the molding die when the space between the covering member and the molding die is hermetically sealed.

### Advantageous Effects of Invention

According to the present disclosure, the occurrence of molding defects due to shaping a laminate can be suppressed.

### Brief Description of Drawings

FIG. 1 is an external perspective view of an example of a composite material molded by a composite material molding method and a molding apparatus according to a first embodiment.
FIG. 2 is a view schematically illustrating the molding apparatus according to the first embodiment.
FIG. 3 is a view of an example of fixation of a laminate.
FIG. 4 is a view of an example of fixation of the laminate.
FIG. 5 is a diagram for explaining the composite material molding method according to the first embodiment.
FIG. 6 is a view schematically illustrating the molding apparatus according to a second embodiment.
FIG. 7 is a view schematically illustrating a molding die of the molding apparatus according to a third embodiment.

### Description of Embodiments

Embodiments according to the present disclosure are described below in greater detail based on the drawings. The present disclosure is not limited by the embodiments. Components in the embodiments below include components substitutable and easily substituted by those skilled in the art or components substantially identical therewith. Furthermore, the components described below can be combined as appropriate, and if there are a plurality of embodiments, the embodiments can be combined.

### [First Embodiment]

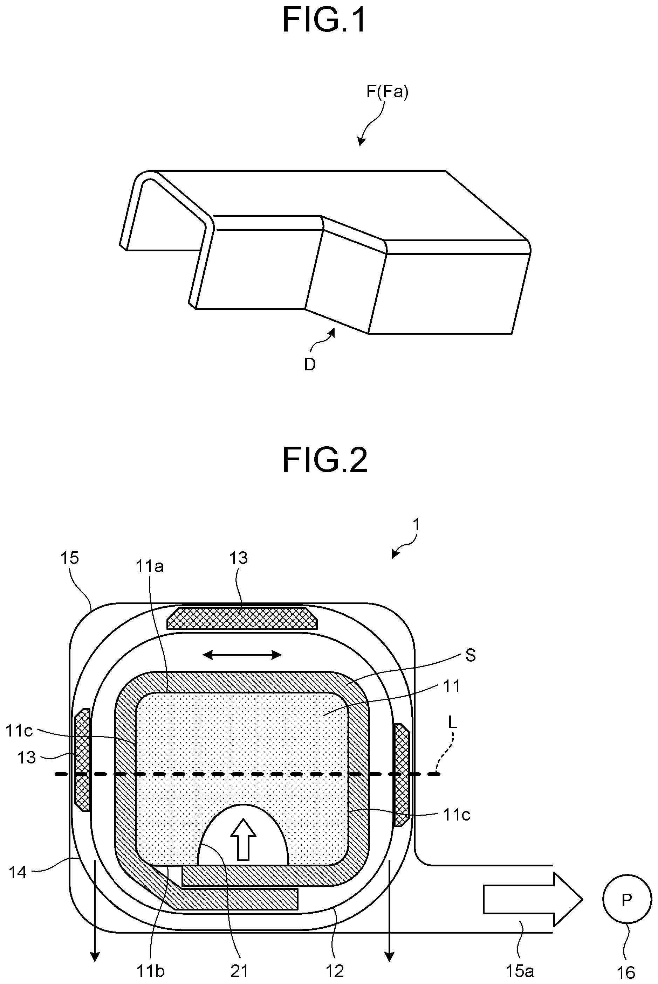

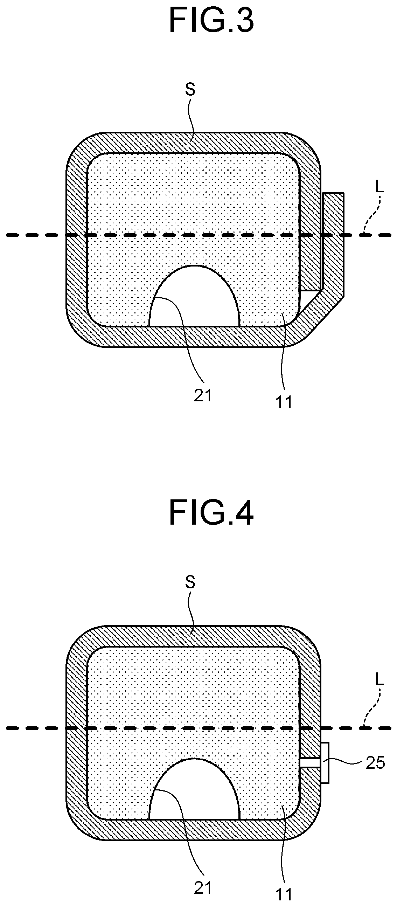

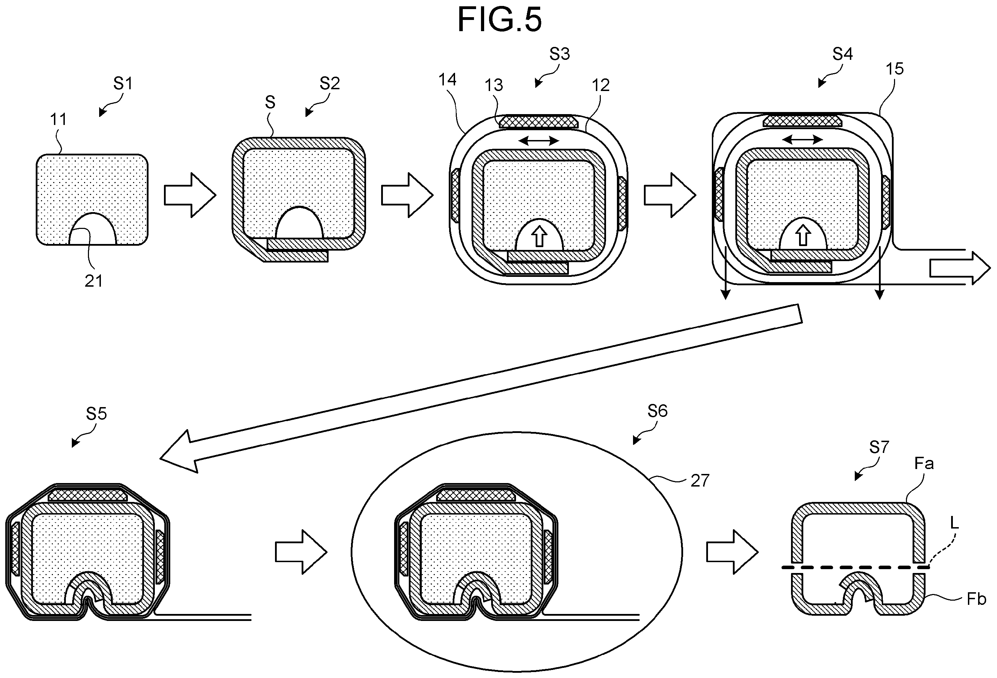

FIG. 1 is an external perspective view of an example of a composite material molded by a composite material molding method and a molding apparatus according to a first embodiment. FIG. 2 is a view schematically illustrating the molding apparatus according to the first embodiment. FIGS. 3 and 4 are views of an example of fixation of a laminate. FIG. 5 is a diagram for explaining the composite material molding method according to the first embodiment.

The composite material molding method and a molding apparatus 1 according to the first embodiment is an apparatus for molding a composite material F having a shape-changing portion D. As illustrated in FIG. 1, the composite material F molded in the first embodiment is a girder member (spar) with a predetermined direction as the longitudinal direction and is two-dimensionally deformed to have a recessed sectional shape in an orthogonal plane orthogonal to the longitudinal direction. The shape-changing portion D is called a joggle portion, for example. The joggle portion is provided to the girder member extending in the longitudinal direction. The joggle portion is a portion at which a recessed sectional shape in the section orthogonal to the longitudinal direction changes along the longitudinal direction, that is, a portion at which the length in the width direction orthogonal to the longitudinal direction changes. In other words, the shape-changing portion D is a three-dimensionally deformed portion in which the composite material F two-dimensionally deformed in the section is also deformed in the longitudinal direction. The shape-changing portion D is not particularly limited to the portion described above and may be any portion as long as it is a portion at which the shape changes.

In the first embodiment, a plurality of fiber sheets are laminated on a molding die 11 to form a laminate S in a shape having the shape-changing portion D. The resin impregnated in the laminate S is cured to mold the composite material F illustrated in FIG. 1. Alternatively, the laminate S in which a plurality of fiber sheets are laminated and which are formed in a planar shape may be shaped into a shape having the shape-changing portion D using the molding die 11. In the shape-changing portion D, the length of the laminate S in the orthogonal plane orthogonal to the longitudinal direction changes along the longitudinal direction in the shaping, and the position where wrinkles are to be formed is estimated based on this change. The fiber sheet according to the first embodiment is a sheet obtained by impregnating reinforced fibers with resin and is prepreg, for example. While prepreg is used as the fiber sheet according to the first embodiment, the first embodiment is not limited to this configuration, and a dry reinforced fiber sheet not including resin may be used.

### (Molding Apparatus)

The molding apparatus 1 is described with reference to FIG. 2. As illustrated in FIG. 2, the molding apparatus 1 includes the molding die 11, a release film 12, a breather 14, a bag film (covering member) 15, and a suction device 16. The molding apparatus 1 may further include a pressure plate (pressing member) 13 to achieve the advantageous effects, which will be described later.

The molding die 11 is a die member to shape the laminate S before molding and molds the composite material F after molding, including a product portion Fa and an excess portion Fb. The composite material F illustrated in FIG. 1 is the composite material F of the product portion Fa obtained by removing the excess portion Fb.

The molding die 11 is a molding die that is long in the longitudinal direction. The molding die 11 has a first molding surface for molding the product portion Fa, a second molding surface for molding the excess portion Fb, and a recess 21 formed on the second molding surface. Specifically, the molding die 11 has an upper surface 11a, a lower surface 11b opposite to the upper surface 11a, and a pair of side surfaces 11c provided on both sides in the width direction of the upper surface 11a and the lower surface 11b. Although not illustrated in the figure, the molding die 11 has an inclined surface provided on one of the side surfaces 11c to mold the shape-changing portion D. The inclined surface is positioned between the side surface 11c defining the narrower width of the molding die 11 and the side surface 11c defining the wider width of the molding die 11 and is a tapered surface inclined in the longitudinal direction of the molding die 11. The first molding surface is composed of the upper surface 11a, a part closer to the upper surface 11a of the pair of side surfaces 11c extending from the upper surface 11a, and a part closer to the upper surface 11a of the inclined surface extending from the upper surface 11a. The second molding surface is composed of the lower surface 11b, a part closer to the lower surface 11b of the pair of side surfaces 11c extending from the lower surface 11b, and a part closer to the lower surface 11b of the inclined surface extending from the lower surface 11b. The dotted line illustrated in FIGS. 2 to 4 is the boundary line dividing the first molding surface and the second molding surface, that is, the boundary line L dividing the product portion Fa and the excess portion Fb of the composite material F.

The recess 21 is formed on the second molding surface, which is the lower surface 11b according to the first embodiment. The recess 21 is formed, for example, by a curved surface with no steep turns. The recess 21 is a hole or a recessed portion recessed in the lower surface 11b to draw in a part of the laminate S disposed facing the lower surface 11b at a step of sucking the internal atmosphere, which will be described later. The recess 21 is formed at the position where the shape-changing portion D is to be formed, that is, the position where wrinkles are expected to be formed in the longitudinal direction of the molding die 11. The recess 21 is formed at the position on the second molding surface (lower surface 11b) facing the excess portion Fb corresponding to the product portion Fa of the composite material F where wrinkles are expected to be formed in the section orthogonal to the longitudinal direction of the molding die 11. The recess 21 may be formed extending along the longitudinal direction.

As illustrated in FIG. 2, the laminate S is wrapped around the molding die 11 in the peripheral direction of the molding die 11 with the longitudinal direction of the molding die 11 as the axial direction of the central axis. As a result, the laminate S is disposed on the molding die 11 with its part facing the recess 21.

The following describes the part of the laminate S caused to face the recess 21. The fiber sheet used in the laminate S is a unidirectional material with the fiber direction aligned in one predetermined direction. The laminate S is one in which the fiber sheets are laminated, the fiber directions of the fiber sheets being different from each other. The orientation angle at which the fiber direction of the fiber sheet is the same direction as the longitudinal direction of the molding die 11 (composite material F) is 0°, and the orientation angle at which the fiber direction of the fiber sheet is the width direction orthogonal to the longitudinal direction is 90°. In this case, the orientation angles of the fiber sheets included in the laminate S are 0°, 45° (+45°), 90°, and 135° (-45°). The part of the laminate S caused to face the recess 21 is the fiber sheet with an orientation angle of 90°. By contrast, the fiber sheets with an orientation angle other than 90° extend from the first molding surface to the second molding surface, but not to the position facing the recess 21. The part of the laminate S at the position facing the recess 21 is drawn into the recess 21 at the step of sucking the internal atmosphere, which will be described later. As a result, a tensile load in the peripheral direction is applied to the laminate S. The fiber direction of the fiber sheet with an orientation angle of 90° is the same direction as the tensile direction of the tensile load applied to the laminate S. For this reason, when a unidirectional material is used as the fiber sheet, the fiber sheet with an orientation angle of 90° is used as the part of the laminate S caused to face the recess 21. As a result, the tensile load is applied in the fiber direction of the fiber sheet, thereby preventing the fibers of the fiber sheets including the other fiber sheets from wrinkling and preventing reduction in strength of the composite material F due to wrinkling. While the fiber sheet with an orientation angle of 90° is caused to face the recess 21 in the first embodiment, the fiber sheet caused to face the recess 21 is not particularly limited. Any fiber sheet with an orientation angle larger than 45° and smaller than 135° is available depending on the laminate pattern of the fiber sheets.

The part of the laminate S caused to face the recess 21 is wrapped around the molding die 11 at the position corresponding to the shape-changing portion D in the longitudinal direction of the molding die 11. In other words, the recess 21 is formed on the second molding surface (lower surface 11b) on the extension of the shape-changing portion D of the composite material F to be molded in the width direction orthogonal to the longitudinal direction of the molding die 11. The part of the laminate S may be wrapped around the molding die 11 in the entire length of the molding die 11 in the longitudinal direction. While the fiber sheet according to the first embodiment is a unidirectional material, it may be woven or non-woven fabric and is not particularly limited.

The following describes fixation of the laminate S wrapped around the molding die 11 with reference to FIGS. 2 to 4. Both ends in the peripheral direction of the laminate S wrapped around the molding die 11 in the peripheral direction of the molding die 11 are fixed to secure reaction force against the tensile load. In the example illustrated in FIG. 2, the laminate S is wrapped around the molding die 11 in a loop shape, both ends in the peripheral direction of the laminate S are overlapped, and the overlapping portions where both ends overlap are fixed with a fixing member, such as a tape. The overlapping portions where both ends of the laminate S overlap is formed facing the recess 21.

In the example illustrated in FIG. 3, similarly to FIG. 2, the laminate S is wrapped around the molding die 11 in a loop shape, both ends in the peripheral direction of the laminate S are overlapped, and the overlapping portions where both ends overlap are fixed with a fixing member, such as a tape. Unlike FIG. 2, the overlapping portions where both ends of the laminate S overlap are formed not facing the recess 21. In the examples illustrated in FIGS. 2 and 3, the fixing member is not necessarily provided if the ends can be fixed by friction between them at the overlapping portions. In the example illustrated in FIG. 3, the overlapping portions where both ends overlap may be positioned in the excess portion Fb.

In the example illustrated in FIG. 4, the laminate S is wrapped around the molding die 11 in a loop shape, both ends in the peripheral direction of the laminate S abut such that they face each other, and the abutting portions where both ends abut are fixed with a fixing member 25, such as a tape. The abutting portions where both ends of the laminate S abut is formed not facing the recess 21. The abutting portions may be formed facing the recess 21.

The release film 12 is disposed to cover the outside of the laminate S wrapped around the molding die 11. The release film 12 prevents the laminate S and the bag film 15 from joining and serves as a film to release the bag film 15 from the laminate S. The release film 12 may be a peel ply that can be peeled away from the laminate S.

The molding apparatus 1 according to the first embodiment may further include a pressure plate 13. The laminate S may be pressed by additionally using the pressure plate 13. The pressure plate 13 is disposed outside the release film 12 and is disposed at a predetermined position where the laminate S needs to be pressed. The pressure plates 13 according to the first embodiment are disposed facing the upper surface 11a and the pair of side surfaces 11c of the molding die 11. The pressure plate 13 is formed in a plate shape and suppresses changes in shape outside the laminate S.

The breather 14 is disposed to cover the outside of the release film 12 and the pressure plates 13. The breather 14 forms a deaeration circuit serving as a flow path through which the internal atmosphere of the bag film 15 flows during vacuum suction, which will be described later.

The bag film 15 is a bag-shaped film that accommodates the laminate S together with the molding die 11. The bag film 15 hermetically seals its interior. Therefore, the inside of the bag film 15 and the molding die 11 are hermetically sealed against the outside. The bag film 15 has a suction hole 15a coupled to the suction device 16. The bag film 15 applies pressing force to the laminate S due to the difference between internal and external air pressure (e.g., atmospheric pressure) by the internal atmosphere being vacuum-sucked. The pressing force applied by the bag film 15 is not particularly limited to the atmospheric pressure, and the bag film 15 may apply pressing force larger than the atmospheric pressure to the laminate S by being pressurized by an autoclave or the like.

The suction device 16 is coupled to the suction hole 15a of the bag film 15 and evacuates the inside of the bag film 15.

### (Composite Material Molding Method)

Next, the method for molding the composite material F using the molding apparatus 1 is described with reference to FIG. 5. As illustrated in FIG. 5, in the method for molding the composite material F, the molding die 11 having the recess 21 is prepared first (Step S1). Subsequently, in the method for molding the composite material F, the laminate S is disposed on the molding die 11 with a part of the laminate S facing the recess 21 (Step S2). At Step S2, the fiber sheet is wrapped around the molding die 11, and the wrapping is repeated a plurality of times to laminate the fiber sheets and form the laminate S. At Step S2, at least a part of the laminate S, that is, the fiber sheet with an orientation angle of 90°, for example, is wrapped around the molding die 11 in the peripheral direction of the molding die 11 and is disposed facing the recess 21. At Step S2, the laminate S may be fixed by any one of the fixation methods illustrated in FIGS. 2 to 4. At Step S2, evacuation may be performed using the bag film 15 every time several layers are laminated to remove air remaining between the layers of fiber sheets (to debulk).

Subsequently, in the method for molding the composite material F, the release film 12, the pressure plates 13, and the breather 14 are disposed in order outside the laminate S wrapped around the molding die 11 (Step S3). Subsequently, in the method for molding the composite material F, the laminate S wrapped around the molding die 11 is accommodated in the bag film 15 together with the release film 12, the pressure plates 13, and the breather 14 (Step S4). At Step S4, the laminate S is covered with the bag film 15, and the inside of the bag film 15 accommodating the molding die 11 is hermetically sealed. Subsequently, in the method for molding the composite material F, the inside of the bag film 15 is evacuated by the suction device 16, whereby the internal atmosphere of the bag film 15 is sucked through the deaeration circuit formed by the breather 14 (Step S5). At Step S5, when the inside of the bag film 15 is evacuated, pressing force is applied to the laminate S via the bag film 15 and the release film 12 due to the difference between internal and external pressure. As a result, the part of the laminate S is drawn into the recess 21 of the molding die 11, whereby a tensile load in the peripheral direction is applied to the laminate S. Thus, the tensile load is applied to the portion where the length of the laminate S changes, thereby suppressing formation of wrinkles. At Step S5, the laminate S is shaped along the first molding surface and the second molding surface of the molding die 11. If the fiber sheets of the laminate S are dry reinforced fiber sheets, a step of impregnating the fiber sheets with resin is performed after or simultaneously with Step S5.

Subsequently, in the method for molding the composite material F, the laminate S after shaping is heated together with the bag film 15 in a furnace 27 to cure the resin impregnated in the laminate S (Step S6). At Step S6, the laminate S after shaping is cured by heat to mold the composite material F including the product portion Fa and the excess portion Fb. The furnace 27 may be an oven that does not perform pressurization or an autoclave that performs pressurization. In other words, in the heat-curing of the laminate S, the laminate S may be pressurized and heated or may be heated under atmospheric pressure. Subsequently, in the method for molding the composite material F, the composite material F after molding is released from the molding die 11, and the excess portion Fb of the composite material F after molding is removed by trimming (Step S7). Thus, the product portion Fa of the composite material F having the shape-changing portion D illustrated in FIG. 1 is obtained. After execution of Step S7, the method for molding the composite material F is ended.

### [Second Embodiment]

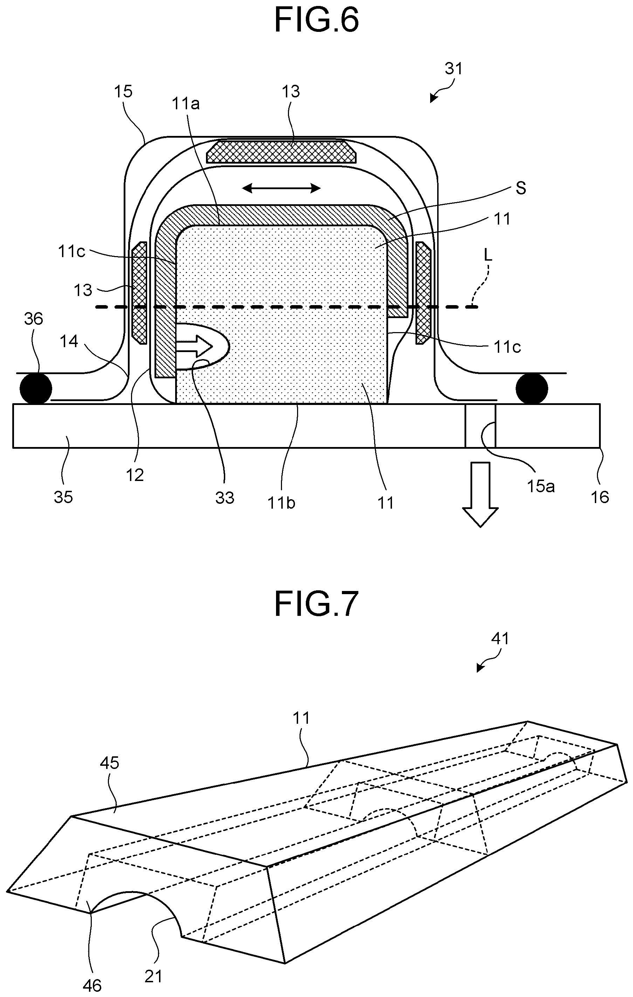

Next, a second embodiment is described with reference to FIG. 6. To avoid duplicate descriptions, the second embodiment describes points different from the first embodiment, and components having the same configuration as those according to the first embodiment are denoted by like reference numerals. FIG. 6 is a view schematically illustrating the molding apparatus according to the second embodiment.

A molding apparatus 31 according to the second embodiment is different from the first embodiment in the position of a recess 33 formed in the molding die 11 and has an apparatus configuration in which the molding die 11 is disposed on a bottom plate 35. Similarly to the first embodiment, the molding apparatus 31 includes the molding die 11, the release film 12, the pressure plates 13, the breather 14, the bag film 15, and the suction device (not illustrated). The molding apparatus 31 further includes the bottom plate 35 on which the molding die 11 is disposed. Explanation of the release film 12 and the pressure plate 13 is omitted because they are the same as those according to the first embodiment.

In the molding die 11, the recess 33 in the molding die 11 is formed on the second molding surface, specifically on a part closer to the lower surface 11b of one of the side surfaces 11c. The recess 33 may be formed not only on a part closer to the lower surface 11b of one of the side surfaces 11c but also on a part closer to the lower surface 11b of the other of the side surfaces 11c, and the two recesses 33 may be formed to face each other. In other words, the number of recesses 33 may be one or two and simply needs to be more than one.

As illustrated in FIG. 6, the laminate S is formed on the molding die 11 over the first molding surface of the molding die 11 and the part closer to the lower surface 11b of one of the side surfaces 11c. The laminate S is disposed on the molding die 11 with its part, specifically one end in the width direction, facing the recess 33.

The following describes fixation of the laminate S disposed on the molding die 11. Both ends in the width direction of the laminate S disposed on the molding die 11 are fixed to secure reaction force against the tensile load. Specifically, both ends in the width direction of the laminate S are positioned on the pair of side surfaces 11c of the molding die 11 and are fixed to the molding die 11 with a fixing member, such as a tape.

The bottom plate 35 is a base having a flat plate shape and has the suction hole 15a coupled to the suction device. The breather 14 is disposed to cover the outside of the molding die 11 placed on the bottom plate 35, the release film 12, and the pressure plates 13, and the periphery of the breather 14 is disposed on the bottom plate 35 and faces the suction hole 15a. The bag film 15 is disposed to cover the outside of the molding die 11 placed on the bottom plate 35, the release film 12, the pressure plates 13, and the breather 14 and is fixed on the bottom plate 35 with a sealant 36 interposed therebetween. Therefore, the space between the bag film 15 and the bottom plate 35 is hermetically sealed.

In the method for molding the composite material F using the molding die 11 described above, the release film 12 and the pressure plates 13 are disposed on the laminate S disposed on the molding die 11, and the molding die 11 is placed on the bottom plate 35. Subsequently, in the method for molding the composite material F, the laminate S including the molding die 11 placed on the bottom plate 35 is covered with the breather 14 and the bag film 15, and the internal atmosphere in the space between the bag film 15 and the bottom plate 35 is sucked. As a result, one end of the laminate S is drawn into the recess 33 of the molding die 11, whereby a tensile load is applied to the laminate S. Thus, the tensile load in the peripheral direction is applied to the portion where the length of the laminate S changes, thereby suppressing formation of wrinkles.

### [Third Embodiment]

Next, a third embodiment is described with reference to FIG. 7. To avoid duplicate descriptions, the third embodiment also describes points different from the first and the second embodiments, and components having the same configuration as those according to the first and the second embodiments are denoted by like reference numerals. FIG. 7 is a view schematically illustrating the molding die of the molding apparatus according to the third embodiment.

The molding die 11 of a molding apparatus 41 according to the third embodiment includes a molding die body 45 and an attachment portion 46 attached to and detached from the molding die body 45. The lower surface 11b of the molding die body 45 has a fitting groove to which the attachment portion 46 is fitted and attached. The recess 21 is formed in the attachment portion 46. The recess 21 is formed in the longitudinal direction of the molding die 11, for example, and the attachment portion 46 is detachably provided in the fitting groove formed on the lower surface 11b of the molding die body 45 and is provided along the recess 21 in the longitudinal direction. A plurality of attachment portions 46 may be prepared depending on the shape of the recess 21. For example, to satisfy proper molding conditions according to the conditions of the laminate S, molding can be performed by sequentially replacing the attachment portions 46 having the recess 21 with different shapes.

The shape of the recess 21 in the section orthogonal to the longitudinal direction may be changed depending on the shape of the composite material F to be molded. If the composite material F is a girder member with its size in the section decreasing from one side to the other side in the longitudinal direction, for example, the sectional shape of the recess 21 in the section may change such that it decreases from the one side to the other side in the longitudinal direction. The shape of the recess 21 according to the third embodiment may be changed by replacing the attachment portion 46 on the molding die body 45. While the attachment portion 46 and the fitting groove according to the third embodiment are provided on the lower surface 11b of the molding die body 45, they may be provided on the side surface 11c instead of the lower surface 11b.

While the first to the third embodiments have described molding the composite material F having the shape-changing portion D, the present disclosure may be applied to the composite material F not having the shape-changing portion D, that is, a girder member (spar) two-dimensionally deformed so as to have a recessed sectional shape in an orthogonal plane orthogonal to the longitudinal direction. In this case, formation of wrinkles can be suppressed at corners and other portions formed in the girder member independently of the shape-changing portion D.

As described above, the composite material molding method and the molding apparatus 1 described in the first to the third embodiments are considered as follows, for example.

A composite material molding method according to a first aspect is as follows. In a method for molding a composite material F by shaping and curing by using a molding die 11 a laminate S in which a plurality of fiber sheets are laminated, the composite material F includes a product portion Fa serving as a portion to be molded as a product and an excess portion Fb extending from the product portion Fa, and the molding die 11 has a first molding surface for molding the product portion Fa, a second molding surface for molding the excess portion Fb, and a recess 21 for drawing in a part of the laminate S disposed on the second molding surface. The composite material molding method comprises Step S2 of disposing the laminate S on the molding die 11 with the part of the laminate S facing the recess 21, Step S4 of covering the laminate S with a covering member (bag film 15) and hermetically sealing a space between the covering member and the molding die 11, Step S5 of sucking atmosphere in the space between the covering member and the molding die 11, drawing in the part of the laminate S into the recess 21, and shaping the laminate S, and Step S6 of molding the composite material F including the product portion Fa and the excess portion Fb by curing the laminate S after shaping.

With this configuration, the laminate S can be shaped with a tensile load applied to the laminate S by drawing in the part of the laminate S into the recess 21. Therefore, the occurrence of molding defects due to shaping the laminate S can be suppressed. By contrast, in the conventional molding method of covering the entire molding die with a bag film, pressing force due to the difference between internal and external pressure applied in the molding step acts in the direction normal to the molding surface, and wrinkles at a joggle portion fail to be effectively eliminated. The configuration according to the present disclosure can suppress the occurrence of molding defects by drawing in the part of the laminate S and applying a tensile load to the laminate S in the shaping step or the molding step.

A second aspect is as follows. In the method for molding the composite material F according to the first aspect, the composite material F is a girder member that is long in a longitudinal direction and deformed in an orthogonal plane orthogonal to the longitudinal direction, the product portion Fa has a shape-changing portion D at which the shape changes, and the shape-changing portion D is a portion deformed in a plane including the longitudinal direction of the girder member.

With this configuration, the occurrence of molding defects due to shaping the laminate S can be suppressed if the composite material F has the shape-changing portion D.

A third aspect is as follows. In the method for molding the composite material F according to the second aspect, the fiber sheet is a unidirectional material with a fiber direction aligned in one direction, the laminate S is one in which the fiber sheets are laminated, the fiber directions of the fiber sheets being different from each other, when an orientation angle at which the fiber direction of the fiber sheet is the same direction as the longitudinal direction is 0°, and an orientation angle at which the fiber direction of the fiber sheet is a direction orthogonal to the longitudinal direction is 90°, the recess 21 is formed on the second molding surface on an extension of the shape-changing portion D in the direction orthogonal to the longitudinal direction, and the fiber sheet the orientation angle of which is larger than 45° and smaller than 135° is caused to face the recess 21 as the part of the laminate S caused to face the recess 21 at the step of disposing the laminate S on the molding die 11.

With this configuration, the fibers of the fiber sheet are prevented from wrinkling, and the laminate S can be suitably shaped if a unidirectional material is used as the fiber sheet.

A fourth aspect is as follows. The method for molding the composite material F according to any one of the first to the third aspects further comprises a step of removing the excess portion Fb of the composite material F after molding.

With this configuration, the product portion Fa of the composite material F can be suitably molded by removing the excess portion Fb of the composite material F molded by being drawn into the recess 21.

A fifth aspect is as follows. In the method for molding the composite material F according to any one of the first to the fourth aspects, the covering member is a bag film 15 that accommodates the laminate S together with the molding die 11.

With this configuration, the laminate S can be shaped by being accommodated in the bag film 15 together with the molding die 11. Therefore, the apparatus configuration of the molding apparatus 1 can be made compact.

A sixth aspect is as follows. In the method for molding the composite material F according to any one of the first to the fifth aspects, the molding die 11 is long in a longitudinal direction, and the laminate S is disposed on the molding die 11 by being wrapped around the molding die 11 in a peripheral direction of the molding die 11 with the longitudinal direction as an axial direction of the central axis at Step S2 of disposing the laminate S on the molding die 11.

With this configuration, the laminate S can be readily disposed along the molding surface of the molding die 11 simply by wrapping the laminate S around the molding die 11 in the peripheral direction of the molding die 11.

A seventh aspect is as follows. In the method for molding the composite material F according to the sixth aspect, both ends in a peripheral direction of the laminate S wrapped around the molding die 11 in the peripheral direction of the molding die 11 are overlapped at the step of disposing the laminate S on the molding die 11.

With this configuration, reaction force can be mutually applied to both ends of the laminate S by overlapping both ends of the laminate S. Therefore, a tensile load can be suitably applied to the laminate S if the part of the laminate S is drawn into the recess 21.

An eighth aspect is as follows. In the method for molding the composite material F according to the sixth aspect, both ends in a peripheral direction of the laminate S wrapped around the molding die 11 in the peripheral direction of the molding die 11 are caused to abut and joined together at the step of disposing the laminate S on the molding die 11.

With this configuration, reaction force can be mutually applied to both ends of the laminate S by abutting and joining both ends of the laminate S. Therefore, a tensile load can be suitably applied to the laminate S if the part of the laminate S is drawn into the recess 21.

A ninth aspect is as follows. In the method for molding the composite material F according to any one of the first to the eighth aspects, a pressing member (pressure plate 13) for pressing the laminate S such that the laminate S extends along the molding die 11 is disposed on the laminate S at Step S4 of hermetically sealing the space between the covering member and the molding die 11.

With this configuration, when a tensile load is applied to the laminate S, the laminate S tends to become circular due to the principle of minimum free energy (principle of minimum potential energy). At this time, the pressing member presses the laminate S toward the molding die 11, thereby preventing the laminate S from becoming circular due to the rigidity in the pressing direction and shaping the laminate S along the molding die 11. While the ends of the pressing member are preferably chamfered because the ground pressure to the laminate S is locally higher and the footprint is transferred to the laminate S, chamfering is not necessarily performed.

A molding apparatus according to a tenth aspect is as follows. In a molding apparatus 1 configured to mold a composite material F by shaping and curing a laminate S in which a plurality of fiber sheets are laminated, the composite material F includes a product portion Fa serving as a portion to be molded as a product and an excess portion Fb extending from the product portion Fa. The molding apparatus 1 comprises a molding die 11 having a first molding surface for molding the product portion Fa, a second molding surface for molding the excess portion Fb, and a recess 21 for drawing in a part of the laminate S disposed on the second molding surface, a covering member (bag film 15) that covers the laminate S, and a suction device 16 configured to suck atmosphere in a space between the covering member and the molding die 11 when the space between the covering member and the molding die 11 is hermetically sealed.

With this configuration, the laminate S can be shaped with a tensile load applied to the laminate S by drawing in the part of the laminate S into the recess 21. Therefore, the occurrence of molding defects due to shaping the laminate S can be suppressed.

An eleventh aspect is as follows. In the molding apparatus according to the tenth aspect, the composite material F is a girder member that is long in a longitudinal direction and deformed in an orthogonal plane orthogonal to the longitudinal direction, the size in the orthogonal plane decreases from one side to the other side in the longitudinal direction, and the sectional shape in the orthogonal plane of the recess 21 decreases from the one side to the other side in the longitudinal direction.

With this configuration, the magnitude of the tensile load can be appropriately changed by changing the size of the sectional shape of the recess 21 depending on the size in the orthogonal plane (section) of the composite material.

A twelfth aspect is as follows. In the molding apparatus according to the tenth or the eleventh aspect, the molding die 11 comprises a molding die body 45 and an attachment portion 46 attached to and detached from the molding die body 45 and having the recess 21.

With this configuration, the shape of the recess 21 can be readily changed by replacing the attachment portion 46 on the molding die body 45.

### Reference Signs List

1 Molding apparatus
11 Molding die
12 Release film
13 Pressure plate (pressing member)
14 Breather
15 Bag film (covering member)
16 Suction device
21 Recess
31 Molding apparatus (second embodiment)
33 Recess
41 Molding apparatus (third embodiment)
45 Molding die body
46 Attachment portion
D Shape-changing portion
F Composite material
Fa Product portion
Fb Excess portion
S Laminate

## Claims

1. A composite material molding method for molding a composite material by shaping, by using a molding die, a laminate in which a plurality of fiber sheets are laminated, and curing resin impregnated in the fiber sheets, wherein
the composite material includes a product portion serving as a portion to be molded as a product and an excess portion extending from the product portion,
the molding die has a first molding surface for molding the product portion, a second molding surface for molding the excess portion, and a recess for drawing in a part of the laminate disposed on the second molding surface, and
the composite material molding method comprises the steps of:
disposing the laminate on the molding die over the first molding surface and the second molding surface such that the part of the laminate faces the recess;
covering the laminate with a covering member to hermetically seal a space between the covering member and the molding die;
sucking atmosphere in the space between the covering member and the molding die to draw in the part of the laminate into the recess and to shape the laminate; and
molding the composite material including the product portion and the excess portion by curing the laminate after shaping.

2. The composite material molding method according to claim 1, wherein
the composite material is a girder member that is long in a longitudinal direction and deformed in an orthogonal plane orthogonal to the longitudinal direction,
the product portion has a shape-changing portion at which the shape changes, and
the shape-changing portion is a portion deformed in a plane including the longitudinal direction of the girder member.

3. The composite material molding method according to claim 2, wherein
the fiber sheet is a unidirectional material with a fiber direction aligned in one direction,
the laminate is one in which the fiber sheets are laminated with the fiber directions of the fiber sheets being different from each other,
when an orientation angle at which the fiber direction of the fiber sheet is the same direction as the longitudinal direction is 0°, and an orientation angle at which the fiber direction of the fiber sheet is a direction orthogonal to the longitudinal direction is 90°,
the recess is formed on the second molding surface on an extension of the shape-changing portion in the direction orthogonal to the longitudinal direction, and
the step of disposing the laminate on the molding die includes causing the fiber sheet in which the orientation angle of which is larger than 45° and smaller than 135°to face the recess as the part of the laminate.

4. The composite material molding method according to claim 1, further comprising a step of removing the excess portion of the composite material after molding.

5. The composite material molding method according to claim 1, wherein the covering member is a bag film that accommodates the laminate together with the molding die.

6. The composite material molding method according to claim 1, wherein
the molding die is long in a longitudinal direction, and
the step of disposing the laminate on the molding die includes disposing the laminate on the molding die by wrapping the laminate around the molding die in a peripheral direction of the molding die with the longitudinal direction as an axial direction of the central axis.

7. The composite material molding method according to claim 6, wherein the step of disposing the laminate on the molding die includes overlapping both ends in the peripheral direction of the laminate wrapped around the molding die in the peripheral direction of the molding die.

8. The composite material molding method according to claim 6, wherein the step of disposing the laminate on the molding die includes causing both ends in the peripheral direction of the laminate wrapped around the molding die in the peripheral direction of the molding die to abut and to be joined together.

9. The composite material molding method according to claim 1, wherein the step to hermetically seal the space between the covering member and the molding die includes disposing on the laminate a pressing member for pressing the laminate such that the laminate extends along the molding die.

10. A molding apparatus configured to mold a composite material by shaping a laminate in which a plurality of fiber sheets are laminated, and curing resin impregnated in the fiber sheets, wherein
the composite material includes a product portion serving as a portion to be molded as a product and an excess portion extending from the product portion, and
the molding apparatus comprises:
a molding die having a first molding surface for molding the product portion, a second molding surface for molding the excess portion, and a recess for drawing in a part of the laminate disposed on the second molding surface;
a covering member that covers the laminate; and
a suction device configured to suck atmosphere in a space between the covering member and the molding die when the space between the covering member and the molding die is hermetically sealed.

11. The molding apparatus according to claim 10, wherein
the composite material is a girder member that is long in a longitudinal direction and deformed in an orthogonal plane orthogonal to the longitudinal direction, and the sectional shape in the orthogonal plane changes from one side to another side in the longitudinal direction, and
the recess has a sectional shape changing in the orthogonal plane from one side to another side in the longitudinal direction.

12. The molding apparatus according to claim 10, wherein the molding die includes a molding die body, and an attachment portion attached to and detached from the molding die body and having the recess formed.
